# EUROPEAN PATENT APPLICATION

(11) **EP 4 841 887 A1**
(43) Date of publication of application: **18.11.2026**
(21) Application number: 26175686.0
(22) Date of filing: 30.04.2026
(51) Int. Cl.: H02S 40/10

(54) **SUSPENDED PHOTOVOLTAIC PANEL CLEANING ROBOT**

(30) Priority: 16.05.2025 CN 202510635387
(71) Applicant: Qingdao Wangbaoqiang Industry Co., Ltd, Qingdao, Shandong (CN)
(72) Inventor: WANG, Baoshan, Qingdao City (CN); ZHANG, Yinxian, Qingdao City (CN); WANG, Chenguang, Qingdao City (CN); YANG, Can, Qingdao City (CN)
(74) Representative: Chung, Hoi Kan

(57) **Abstract**

The disclosure relates to the field of photovoltaic panel cleaning and discloses a suspended photovoltaic panel cleaning robot, including: a guide rail mechanism, a lifting mechanism, a panel cleaning mechanism, and a pulley mechanism; wherein the guide rail mechanism is arranged on a side of the photovoltaic panel away from a ground, the panel cleaning mechanism is arranged on a sunlight-exposed surface of the photovoltaic panel, the lifting mechanism is installed on the guide rail mechanism, and the lifting mechanism is connected to the panel cleaning mechanism through the pulley mechanism. In an embodiment of the disclosure, the guide rail mechanism enables the lifting mechanism to move horizontally, and the pulley mechanism enables the panel cleaning mechanism to move vertically, reducing the complexity of external auxiliary structures and the setting of sensors, achieving efficient and full-coverage cleaning of photovoltaic panels.

## Description

### TECHNICAL FIELD

The disclosure relates to the field of photovoltaic panel cleaning, and in particular to a suspended photovoltaic panel cleaning robot.

### BACKGROUND

A photovoltaic panel (also known as a solar panel) is a device that directly converts solar light energy into electrical energy and is a core component of a solar photovoltaic power generation system. When sunlight shines on the surface of the photovoltaic panel, the energy of photons excites electrons to break free from the constraints of atomic nuclei inside the semiconductor material, forming electron-hole pairs. When an external circuit is connected, this potential difference drives electrons to flow through the external circuit, forming an electric current, thereby converting solar light energy into electrical energy and providing electrical energy support for various electrical apparatuses. Since the conversion efficiency of the photovoltaic panel is related to the intensity of light energy absorption, in order to maintain the conversion efficiency of the photovoltaic panel, it is necessary to clean the photovoltaic panel regularly to remove surface dust.

There are currently many technologies for cleaning photovoltaic panels, and the scenarios and environments in which different technologies are applied are different. In low-latitude regions, the solar altitude angle is relatively large and water resources are relatively abundant. Photovoltaic panels are mostly installed at a relatively small inclination angle to achieve the best power generation efficiency. In this case, the application of cleaning technology mainly focuses on efficient liquid spray cleaning systems. Since the inclination angle of the panel is relatively small, the liquid spray can uniformly cover the entire surface of the panel, and the cleaning liquid can flow down smoothly under the action of gravity, taking away dust and dirt and achieving a good cleaning effect. At the same time, for manual cleaning, the relatively small inclination angle also makes it easier for cleaning personnel to operate, allowing them to more conveniently wipe with brushes or cloths, and resulting in relatively higher cleaning efficiency.

In high-latitude regions, the solar altitude angle is relatively small and water resources are relatively scarce. Photovoltaic panels need to be installed at a relatively large inclination angle to ensure sufficient sunlight exposure. For panels with such a relatively large inclination angle, the cleaning robot can move stably along the inclined surface of the panel, and its brush rollers may effectively brush away dust and dirt, keeping the panels dry. However, in panel cleaning solutions for high-latitude regions, cleaning robots have complex structures and employ a large number of sensors dedicated to panel cleaning, resulting in excessively high implementation costs and creating significant barriers to application. For example, CLEANING EQUIPMENT FOR PHOTOVOLTAIC PANEL disclosed in Chinese invention patent CN116388674B and SELF-ADAPTIVE POSTURE PHOTOVOLTAIC PANEL CLEANING DEVICE disclosed in Chinese invention patent CN116781002A employ excessive external auxiliary structures and attitude control-related sensors, resulting in excessive costs for cleaning panels. Therefore, a new cleaning machine technology is needed to solve the problem of excessively high cleaning costs of machines for photovoltaic panels in high-latitude regions due to complex external auxiliary structures and excessive sensors.

### SUMMARY

The main objective of the disclosure is to solve the technical problem of excessively high cleaning costs of machines for photovoltaic panels in high-latitude regions due to complex external auxiliary structures and excessive sensors.

A first aspect of the disclosure provides a suspended photovoltaic panel cleaning robot, including:

a guide rail mechanism, a lifting mechanism, a panel cleaning mechanism, and a pulley mechanism;

wherein the guide rail mechanism is arranged on a side of the photovoltaic panel away from a ground, the lifting mechanism is installed on the guide rail mechanism, the panel cleaning mechanism is arranged on a sunlight-exposed surface of the photovoltaic panel, and the lifting mechanism is connected to the panel cleaning mechanism through the pulley mechanism.

Optionally, in a first implementation of the first aspect of the disclosure, the pulley mechanism includes a suspension line and a fixed pulley assembly, the lifting mechanism is provided with a winding hub, one end of the suspension line is fixed to the lifting mechanism, and the other end of the suspension line passes through the fixed pulley assembly arranged on the panel cleaning mechanism and is fixed to the winding hub.

Optionally, in a second implementation of the first aspect of the disclosure, the fixed pulley assembly includes a first fixed pulley and a second fixed pulley, the winding hub includes a first sub-hub and a second sub-hub, the first fixed pulley is arranged below the first sub-hub, and the second fixed pulley is arranged below the second sub-hub.

Optionally, in a third implementation of the first aspect of the disclosure, the fixed pulley assembly further includes a third fixed pulley and a fourth fixed pulley, the suspension line includes a first sub-suspension line and a second sub-suspension line, one end of the first sub-suspension line is fixed to the lifting mechanism, the other end of the first sub-suspension line passes through the third fixed pulley and the first fixed pulley and is fixed to the first sub-hub, one end of the second sub-suspension line is fixed to the lifting mechanism, and the other end of the second sub-suspension line passes through the fourth fixed pulley and the second fixed pulley and is fixed to the second sub-hub.

Optionally, in a fourth implementation of the first aspect of the disclosure, the guide rail mechanism includes a first guide rail and a second guide rail, the lifting mechanism is provided with a first lateral pulley and a second lateral pulley, and the first lateral pulley and the second lateral pulley are arranged to clamp the first guide rail and the second guide rail.

Optionally, in a fifth implementation of the first aspect of the disclosure, the lifting mechanism is provided with a first rail surface pulley and a second rail surface pulley, the first rail surface pulley is vertical to the first lateral pulley and installed on the first guide rail, and the second rail surface pulley is vertical to the second lateral pulley and installed on the second guide rail.

Optionally, in a sixth implementation of the first aspect of the disclosure, the lifting mechanism is provided with a slide rail motor, and the slide rail motor is axially connected to the first rail surface pulley.

Optionally, in a seventh implementation of the first aspect of the disclosure, the lifting mechanism is further provided with a winding motor, a winding hub, a transmission mechanism, a limit gear, a first connecting rod, a second connecting rod, and a microswitch; the winding motor is axially connected to the winding hub, the winding hub is fixedly connected to the transmission mechanism, the transmission mechanism is meshed and connected to the limit gear, the first connecting rod and the second connecting rod are fixedly installed on the limit gear, the winding motor drives the winding hub to rotate, the winding hub drives the limit gear to rotate through the transmission mechanism, the microswitch is arranged on rotation trajectories of rod ends of the first connecting rod and the second connecting rod, the microswitch is provided with a first elastic piece and a second elastic piece on one side of the rotation trajectories of the rod ends, and when the first elastic piece or the second elastic piece is pressed tightly, the winding motor stops rotating.

Optionally, in an eighth implementation of the first aspect of the disclosure, the transmission mechanism includes: a hub transmission gear and a double-link gear, the winding hub is fixedly connected to the hub transmission gear, the hub transmission gear is meshed and connected to an outer gear of the double-link gear, and an inner gear of the double-link gear is meshed and connected to the limit gear.

Optionally, in a ninth implementation of the first aspect of the disclosure, one end of the first connecting rod is provided with a first positioning ring, one end of the second connecting rod is provided with a second positioning ring, the first positioning ring is fixed on an axis center of the limit gear, and the second positioning ring is fixedly installed on an axis center of the first positioning ring.

In an embodiment of the disclosure, by leveraging the characteristic of large inclination angle of photovoltaic panels in high-latitude regions, the photovoltaic cleaning device is configured to perform cleaning by moving up and down using a slide rail mechanism and by moving left and right using a guide rail mechanism. The lifting mechanism is arranged on the guide rail mechanism, and the guide rail mechanism is arranged on a side of the photovoltaic panel away from the ground. By utilizing the decomposed force of gravity, the panel cleaning mechanism moves up and down along the photovoltaic panel, and remains tightly pressed against the photovoltaic panel for cleaning. This solution combines the control of the slide rail mechanism and the guide rail mechanism to not only efficiently achieve full-coverage cleaning of photovoltaic panels, but also reduce the complexity of external auxiliary structures and the number of sensors, effectively reducing the machine cleaning cost of photovoltaic panels in high-latitude regions.

### BRIEF DESCRIPTION OF DRAWINGS

FIG. 1 is a schematic diagram of a specific embodiment of a suspended photovoltaic panel cleaning robot in an embodiment of the disclosure;
FIG. 2 is a schematic diagram of a specific embodiment of a connection between a lifting mechanism and a panel cleaning mechanism of a suspended photovoltaic panel cleaning robot in an embodiment of the disclosure;
FIG. 3 is a schematic diagram of another specific embodiment of a connection between a lifting mechanism and a panel cleaning mechanism of a suspended photovoltaic panel cleaning robot in an embodiment of the disclosure;
FIG. 4 is a schematic diagram of a specific embodiment of an installation of a lifting mechanism and a mechanism rail of a suspended photovoltaic panel cleaning robot in an embodiment of the disclosure;
FIG. 5 is a schematic diagram of a specific embodiment of a lifting mechanism of a suspended photovoltaic panel cleaning robot in an embodiment of the disclosure;
FIG. 6 is an exploded schematic diagram of a lifting mechanism of a suspended photovoltaic panel cleaning robot in an embodiment of the disclosure; and
FIG. 7 is an enlarged schematic diagram of area A in FIG. 6 of a suspended photovoltaic panel cleaning robot in an embodiment of the disclosure.

### Reference numerals:

10-guide rail mechanism, 20-lifting mechanism, 30-panel cleaning mechanism, 40-pulley mechanism, 50-photovoltaic panel, 201-winding hub, 301-fixed pulley assembly, 40X-suspension line, 3011-first fixed pulley, 3012-second fixed pulley, 3013-third fixed pulley, 3014-fourth fixed pulley, 2011-first sub-hub, 2012-second sub-hub, 401-first sub-suspension line, 402-second sub-suspension line, 101-first guide rail, 102-second guide rail, 2021-first lateral pulley, 2022-second lateral pulley, 2031-first rail surface pulley, 2032-second rail surface pulley, 204-slide rail motor, 205-winding motor, 206-transmission mechanism, 207-limit gear, 2071-first connecting rod, 2072-second connecting rod, 208-microswitch, 2081-first elastic piece, 2082-second elastic piece, 2061-hub transmission gear, 2062-double-link gear, 20711-first positioning ring, 20721-second positioning ring, 20621-outer gear, 20622-inner gear.

### DETAILED DESCRIPTION OF THE EMBODIMENTS

An embodiment of the disclosure provides a suspended photovoltaic panel cleaning robot.

The embodiments disclosed in the disclosure will be described in more detail below with reference to the accompanying drawings. Although some embodiments disclosed in the disclosure are shown in the accompanying drawings, it should be understood that the disclosure may be implemented in various forms and should not be construed as being limited to the embodiments described herein. On the contrary, these embodiments are provided to facilitate a more thorough and complete understanding of the disclosure. It should be understood that the accompanying drawings and embodiments disclosed in the disclosure are for illustrative purposes only and are not intended to limit the scope of protection of the disclosure.

In the description of the embodiments disclosed in the disclosure, the term "include" and its similar terms should be understood as open-ended inclusion, i. e., "including but not limited to". The term "based on" should be understood as "at least partially based on". The terms "an embodiment" or "the embodiment" should be understood as "at least one embodiment". The terms "first", "second", and so on may refer to different or the same objects. Other explicit and implicit definitions may also be included below.

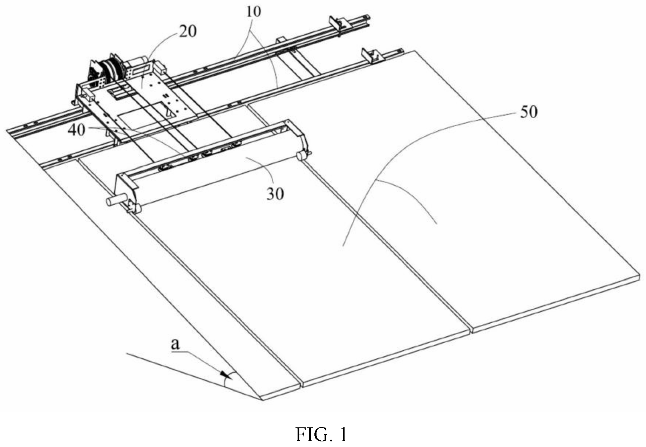

For ease of understanding, the specific process of an embodiment of the disclosure will be described below. Please refer to FIG. 1, which is a schematic diagram of a specific embodiment of a suspended photovoltaic panel cleaning robot in an embodiment of the disclosure. The suspended photovoltaic panel cleaning robot includes: a guide rail mechanism 10, a lifting mechanism 20, a panel cleaning mechanism 30, and a pulley mechanism 40; wherein the guide rail mechanism 10 is arranged on a side of the photovoltaic panel 50 away from a ground, the lifting mechanism 20 is installed on the guide rail mechanism 10, the panel cleaning mechanism 30 is arranged on a sunlight-exposed surface of the photovoltaic panel 50, and by utilizing the decomposed force of gravity, the panel cleaning mechanism 30 moves up and down along the photovoltaic panel 50, and remains tightly pressed against the photovoltaic panel 50 for cleaning. The lifting mechanism 20 is connected to the panel cleaning mechanism 30 through the pulley mechanism 40. For the photovoltaic panel 50 in high-latitude regions, the included angle a between the photovoltaic panel 50 and the horizontal ground is an acute angle, generally set within the range of 15-45 degrees, the guide rail mechanism 10 moves left and right along the guide rail mechanism 10 on a side of the photovoltaic panel 50 away from the ground, and after reaching the photovoltaic panel 50 that needs to be cleaned, the winding motor 205 is driven to lower the panel cleaning mechanism 30 through the pulley mechanism 40 for cleaning, and then the panel cleaning mechanism 30 is retracted by utilizing the pulley mechanism 40 to achieve efficient cleaning of the photovoltaic panel 50.

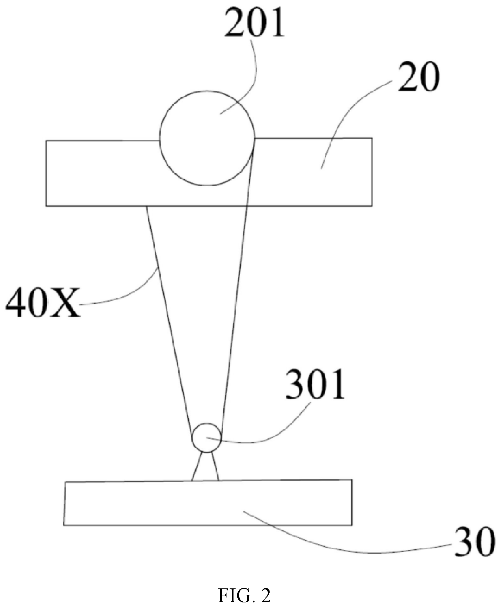

In one embodiment, please refer to FIG. 2, which is a schematic diagram of a specific embodiment of a connection between a lifting mechanism and a panel cleaning mechanism of a suspended photovoltaic panel cleaning robot in an embodiment of the disclosure. This solution is an implementation with a single fixed pulley. The lifting mechanism 20 is provided with a winding hub 201. The pulley mechanism 40 includes a suspension line 40X and a fixed pulley assembly 301. One end of the suspension line 40X is fixed to the lifting mechanism 20, and the other end of the suspension line 40X passes through the fixed pulley assembly 301 arranged on the panel cleaning mechanism 30 and is fixed to the winding hub 201. After setting the balanced state, one end of the suspension line 40X may be fixed to the geometrically symmetrical point of the winding hub 201 where the suspension line 40X is retracted, and the fixed pulley assembly 301 may be arranged at the center of gravity balance point of the panel cleaning mechanism 30, so as to achieve lifting control of the panel cleaning mechanism by a single fixed pulley.

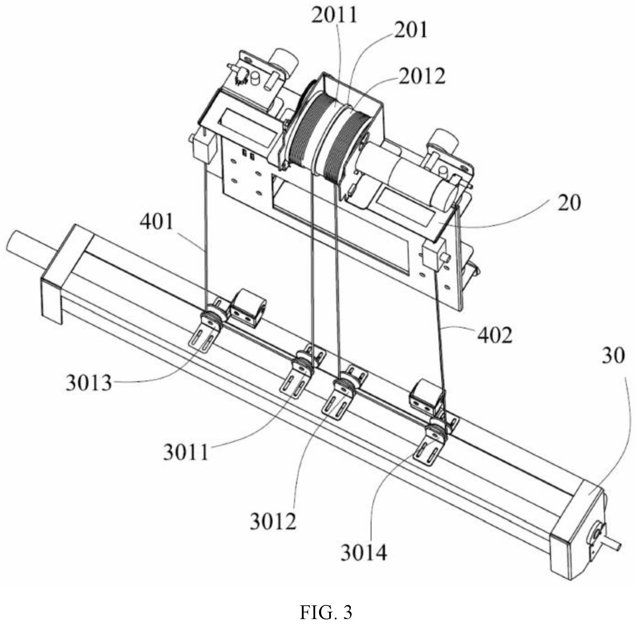

In another embodiment, please refer to FIG. 3, which is a schematic diagram of another specific embodiment of a connection between a lifting mechanism and a panel cleaning mechanism of a suspended photovoltaic panel cleaning robot in an embodiment of the disclosure. This solution is an implementation with multiple fixed pulleys. The fixed pulley assembly 301 includes a first fixed pulley 3011 and a second fixed pulley 3012. The winding hub 201 includes: a first sub-hub 2011 and a second sub-hub 2012. The first fixed pulley 3011 is arranged below the first sub-hub 2011, preferably vertically below, and the second fixed pulley 3012 is arranged below the second sub-hub 2012, preferably vertically below. The fixed pulley assembly 301 is further provided with a third fixed pulley 3013 and a fourth fixed pulley 3014. The suspension line 40X includes: a first sub-suspension line 401 and a second sub-suspension line 402. One end of the first sub-suspension line 401 is fixed to the lifting mechanism 20, and the other end of the first sub-suspension line 401 passes through the third fixed pulley 3013 and the first fixed pulley 3011 and is fixed to the first sub-hub 2011. One end of the second sub-suspension line 402 is fixed to the lifting mechanism 20, and the other end of the second sub-suspension line 402 passes through the fourth fixed pulley 3014 and the second fixed pulley 3012 and is fixed to the second sub-hub 2012. This solution employing multiple fixed pulleys enables more stable lifting control of the panel cleaning mechanism 30, avoiding the deviation in the lifting direction caused by the influence of side wind in the natural environment on a single pulley. This makes the lifting control of the panel cleaning mechanism 30 more resistant to interference, ensuring minimal deviation under the influence of the actual environment during practical use.

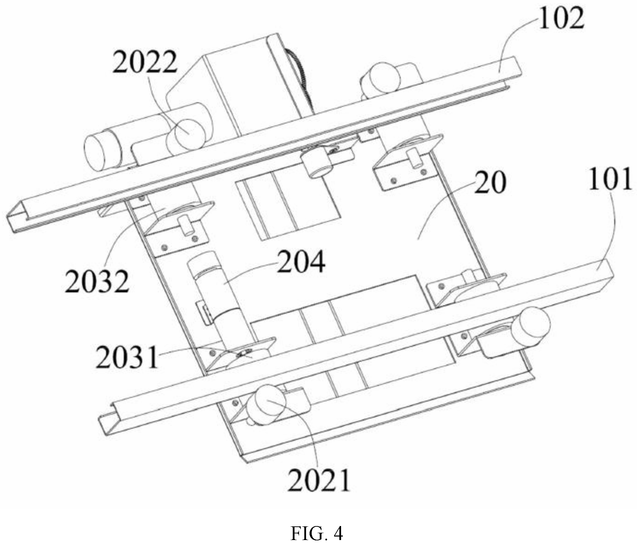

In another embodiment, please refer to FIG. 4, which is a schematic diagram of a specific embodiment of an installation of a lifting mechanism and a mechanism rail of a suspended photovoltaic panel cleaning robot in an embodiment of the disclosure. The guide rail mechanism 10 includes: a first guide rail 101 and a second guide rail 102. The lifting mechanism 20 is provided with a first lateral pulley 2021 and a second lateral pulley 2022. The first lateral pulley 2021 and the second lateral pulley 2022 are arranged to clamp the first guide rail 101 and the second guide rail 102. It should be noted that the lifting mechanism 20 may be provided with multiple pairs of lateral pulleys. The multiple pairs of lateral pulleys are arranged to clamp and guide the first guide rail 101 and the second guide rail 102, and this arrangement may ensure that the lifting mechanism 20 moves stably left and right on the guide rail mechanism 10. Further, to reduce the running friction force of the lifting mechanism 20 on the guide rail mechanism 10, the lifting mechanism 20 is provided with a first rail surface pulley 2031 and a second rail surface pulley 2032. The first rail surface pulley 2031 is vertical to the first lateral pulley 2021 and installed on the first guide rail 101, and the second rail surface pulley 2032 is vertical to the second lateral pulley 2022 and installed on the second guide rail 102. The lifting mechanism 20 is provided with a slide rail motor 204, and the slide rail motor 204 is axially connected to the first rail surface pulley 2031. This solution of the embodiment as a whole enables stable sliding of the lifting mechanism 20 on the guide rail mechanism 10 with low friction force, and only the slide rail motor 204 needs to be started to drive the entire lifting mechanism 20 to move left or right.

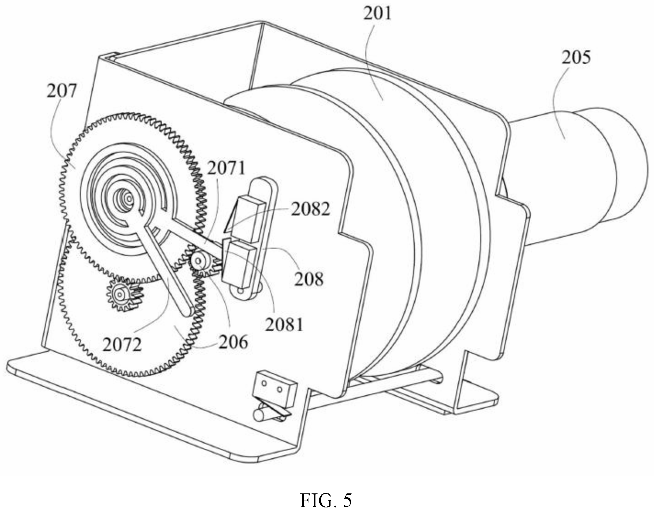

In another embodiment, please refer to FIG. 5, which is a schematic diagram of a specific embodiment of a lifting mechanism of a suspended photovoltaic panel cleaning robot in an embodiment of the disclosure. The lifting mechanism 20 is further provided with a winding motor 205, a winding hub 201, a transmission mechanism 206, a limit gear 207, a first connecting rod 2071, a second connecting rod 2072, and a microswitch 208. The winding motor 205 is axially connected to the winding hub 201, and the winding hub 201 is fixedly connected to the transmission mechanism 206. The transmission mechanism 206 is meshed and connected to the limit gear 207, the first connecting rod 2071 and the second connecting rod 2072 are fixedly installed on the limit gear 207. The winding motor 205 drives the winding hub 201 to rotate, the winding hub 201 drives the limit gear 207 to rotate through the transmission mechanism 206. The microswitch 208 is arranged on rotation trajectories of rod ends of the first connecting rod 2071 and the second connecting rod 2072. The microswitch 208 is provided with a first elastic piece 2081 and a second elastic piece 2082 on one side of the rotation trajectories of the rod ends. When the first elastic piece 2081 or the second elastic piece 2082 is pressed tightly, the microswitch 208 sends a rotation stop signal to the winding motor 205, causing the winding motor 205 to stop rotating.

When the winding motor 205 rotates clockwise, it drives the transmission mechanism 206 to rotate counterclockwise through the winding hub 201, and causes the limit gear 207 to rotate clockwise through gear meshing. The first connecting rod 2071 rotates clockwise away from the first elastic piece 2081, and the second connecting rod 2072 rotates clockwise and then abuts against the second elastic piece 2082. After the second elastic piece 2082 is pressed tightly, the circuit of the microswitch 208 is triggered, and the microswitch 208 stops the rotation of the winding motor 205. By the same token, the case where the winding motor 205 rotates counterclockwise is similar and will not be described herein. The rotation range of the winding hub 201 is limited to the rotation angle range from when the first connecting rod 2071 is pressed tightly against the first elastic piece 2081 to when the second connecting rod 2072 is pressed tightly against the second elastic piece 2082. Based on the rotation angle range, setting the transmission ratio and the radius of the winding hub 201 may effectively control the length of the up-and-down movement of the suspension line of the winding hub 201.

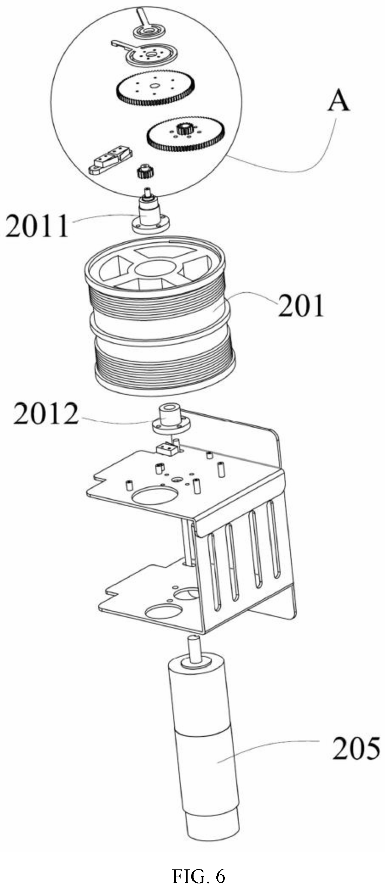

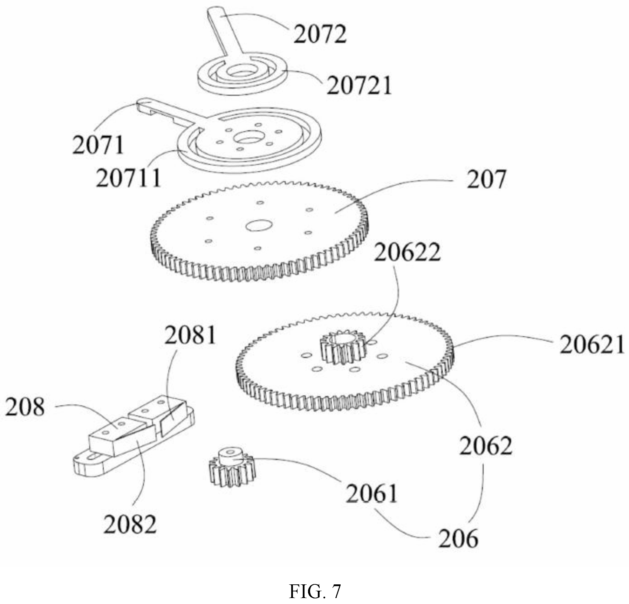

Further, please refer to FIG. 6, which is an exploded schematic diagram of a lifting mechanism of a suspended photovoltaic panel cleaning robot in an embodiment of the disclosure. Please refer to FIG. 7, which is an enlarged schematic diagram of area A in FIG. 6 of a suspended photovoltaic panel cleaning robot in an embodiment of the disclosure. The transmission mechanism 206 includes: a hub transmission gear 2061 and a double-link gear 2062. The winding hub 201 is fixedly connected to the hub transmission gear 2061 through a first matching assembly 2011, the winding hub 201 is fixedly connected to the winding motor 205 through a second matching assembly 2012, the hub transmission gear 2061 is meshed and connected to an outer gear 20621 of the double-link gear 2062, and an inner gear 20622 of the double-link gear 2062 is meshed and connected to the limit gear 207. This solution employs the double-link gear 2062 to facilitate the calculation of the transmission ratio, and can more effectively calculate the lifting limit distance of the suspension line, providing a more precise cleaning range when cleaning the photovoltaic panel 50, avoiding the collision of the panel cleaning mechanism 30 with the lifting mechanism 20, and at the same time avoiding unnecessary losses caused by the collision of the panel cleaning mechanism 30 with the ground.

One end of the first connecting rod 2071 is provided with a first positioning ring 20711, and one end of the second connecting rod 2072 is provided with a second positioning ring 20721. The first positioning ring 20711 is fixed on an axis center of the limit gear 207, and the second positioning ring 20721 is fixedly installed on an axis center of the first positioning ring 20711. The first positioning ring 20711 and the second positioning ring 20721 increase the contact area of the connecting rods, ensure the stable relative positional relationship between the connecting rods and the gears, thereby ensuring the accuracy of transmission, and improving the anti-interference of the entire cleaning device in high-latitude regions.

In an embodiment of the disclosure, by leveraging the characteristic of large inclination angle of photovoltaic panels in high-latitude regions, the photovoltaic cleaning device is configured to perform cleaning by moving up and down using a slide rail mechanism and by moving left and right using a guide rail mechanism. The lifting mechanism is arranged on the guide rail mechanism, and the guide rail mechanism is arranged on a side of the photovoltaic panel away from the ground. By utilizing the decomposed force of gravity, the panel cleaning mechanism moves up and down along the photovoltaic panel, and remains tightly pressed against the photovoltaic panel for cleaning. This solution combines the control of the slide rail mechanism and the guide rail mechanism to not only efficiently achieve full-coverage cleaning of photovoltaic panels, but also reduce the complexity of external auxiliary structures and the number of sensors, effectively reducing the machine cleaning cost of photovoltaic panels in high-latitude regions.

In addition, although various operations are depicted in a specific order, this should be understood as requiring that such operations be performed in the depicted specific order or in sequential order, or requiring that all illustrated operations be performed to achieve the desired results. In certain environments, multitasking and parallel processing may be advantageous. Similarly, although the above discussion contains several specific implementation details, these should not be construed as limiting the scope of the disclosure. Certain features described in the context of separate embodiments may also be implemented in combination in a single implementation. Conversely, various features described in the context of a single implementation may also be implemented separately or in any suitable sub-combination in multiple implementations.

Although the subject matter has been described in language specific to structural features and/or methodological logical actions, it should be understood that the subject matter defined in the appended claims is not necessarily limited to the specific features or actions described above. On the contrary, the specific features and actions described above are merely exemplary forms of implementing the claims.

## Claims

1. A suspended photovoltaic panel cleaning robot comprising:
a guide rail mechanism, a lifting mechanism, a panel cleaning mechanism, and a pulley mechanism;
wherein the guide rail mechanism is arranged on a side of the photovoltaic panel away from a ground, the lifting mechanism is installed on the guide rail mechanism, the panel cleaning mechanism is arranged on a sunlight-exposed surface of the photovoltaic panel, and the lifting mechanism is connected to the panel cleaning mechanism through the pulley mechanism.

2. The suspended photovoltaic panel cleaning robot according to claim 1, wherein the pulley mechanism comprises a suspension line and a fixed pulley assembly, the lifting mechanism is provided with a winding hub, one end of the suspension line is fixed to the lifting mechanism, and the other end of the suspension line passes through the fixed pulley assembly arranged on the panel cleaning mechanism and is fixed to the winding hub.

3. The suspended photovoltaic panel cleaning robot according to claim 2, wherein the fixed pulley assembly comprises a first fixed pulley and a second fixed pulley, the winding hub comprises a first sub-hub and a second sub-hub, the first fixed pulley is arranged below the first sub-hub, and the second fixed pulley is arranged below the second sub-hub.

4. The suspended photovoltaic panel cleaning robot according to claim 3, wherein the fixed pulley assembly further comprises a third fixed pulley and a fourth fixed pulley, the suspension line comprises a first sub-suspension line and a second sub-suspension line, one end of the first sub-suspension line is fixed to the lifting mechanism, the other end of the first sub-suspension line passes through the third fixed pulley and the first fixed pulley and is fixed to the first sub-hub, one end of the second sub-suspension line is fixed to the lifting mechanism, and the other end of the second sub-suspension line passes through the fourth fixed pulley and the second fixed pulley and is fixed to the second sub-hub.

5. The suspended photovoltaic panel cleaning robot according to claim 1, wherein the guide rail mechanism comprises a first guide rail and a second guide rail, the lifting mechanism is provided with a first lateral pulley and a second lateral pulley, and the first lateral pulley and the second lateral pulley are arranged to clamp the first guide rail and the second guide rail.

6. The suspended photovoltaic panel cleaning robot according to claim 5, wherein the lifting mechanism is provided with a first rail surface pulley and a second rail surface pulley, the first rail surface pulley is vertical to the first lateral pulley and installed on the first guide rail, and the second rail surface pulley is vertical to the second lateral pulley and installed on the second guide rail.

7. The suspended photovoltaic panel cleaning robot according to claim 6, wherein the lifting mechanism is provided with a slide rail motor, and the slide rail motor is axially connected to the first rail surface pulley.

8. The suspended photovoltaic panel cleaning robot according to claim 1, wherein the lifting mechanism is further provided with a winding motor, a winding hub, a transmission mechanism, a limit gear, a first connecting rod, a second connecting rod, and a microswitch; the winding motor is axially connected to the winding hub, the winding hub is fixedly connected to the transmission mechanism, the transmission mechanism is meshed and connected to the limit gear, the first connecting rod and the second connecting rod are fixedly installed on the limit gear, the winding motor drives the winding hub to rotate, the winding hub drives the limit gear to rotate through the transmission mechanism, the microswitch is arranged on rotation trajectories of rod ends of the first connecting rod and the second connecting rod, the microswitch is provided with a first elastic piece and a second elastic piece on one side of the rotation trajectories of the rod ends, and when the first elastic piece or the second elastic piece is pressed tightly, the winding motor stops rotating.

9. The suspended photovoltaic panel cleaning robot according to claim 8, wherein the transmission mechanism comprises: a hub transmission gear and a double-link gear, the winding hub is fixedly connected to the hub transmission gear, the hub transmission gear is meshed and connected to an outer gear of the double-link gear, and an inner gear of the double-link gear is meshed and connected to the limit gear.

10. The suspended photovoltaic panel cleaning robot according to claim 8 or 9, wherein one end of the first connecting rod is provided with a first positioning ring, one end of the second connecting rod is provided with a second positioning ring, the first positioning ring is fixed on an axis center of the limit gear, and the second positioning ring is fixedly installed on an axis center of the first positioning ring.
